# EUROPEAN PATENT APPLICATION

(11) **EP 3 832 786 A1**
(43) Date of publication of application: **09.06.2021**
(21) Application number: 19843601.6
(22) Date of filing: 01.08.2019
(51) Int. Cl.: H01M 10/6568, H01M 2/10, H01M 10/613, H01M 10/625, H01M 10/643, H01M 10/647, H01M 10/6556, H05K 7/20, F28F 13/18, F28F 21/06

(54) **COOLING PLATE AND BATTERY STRUCTURE**

(30) Priority: 03.08.2018 JP 2018147073
(71) Applicant: Mitsui Chemicals, Inc., Minato-ku Tokyo 105-7122 (JP)
(72) Inventor: KIMURA Kazuki, Sodegaura-shi, Chiba 299-0265 (JP); NAITOU Shinya, Sodegaura-shi, Chiba 299-0265 (JP); KURIYAGAWA Mizue, Sodegaura-shi, Chiba 299-0265 (JP); TORII Tomoki, Tokyo 105-7122 (JP); NOMOTO Kyohei, Tokyo 105-7122 (JP)
(74) Representative: J A Kemp LLP
(86) International application number: PCT/JP2019/030363
(87) International publication number: WO 2020/027299

(57) **Abstract**

A cooling plate (1) including: a resin plate (2) in which a plurality of groove portions are formed; and a metal plate (3) provided over a surface of the resin plate (2) where the groove portions are formed, in which the resin plate (2) and the metal plate (3) are bonded to each other through an adhesive layer 4, and the groove portion of the resin plate (2) forms a flow path (8) for cooling water.

## Description

### TECHNICAL FIELD

The present invention relates to a cooling plate and a battery structure.

### BACKGROUND ART

A battery block is configured by, for example, arranging and fixing a plurality of battery cells to a support member, and electrically connecting positive and negative terminals of each battery cell to each other by a bus bar or the like. A battery module has, for example, a structure including a plurality of the battery blocks, in which the plural battery blocks are vertically laminated or disposed in parallel, and fixed to a base member.

The battery block and the battery module are mounted for use in, for example, a power source of an electric vehicle, a hybrid vehicle, or the like, and can output a large current. Each battery cell which forms the battery block generates heat during charging and discharging. Accordingly, the battery block may include a cooling device. As an example of the cooling device for a battery block, a structure in which a cooling pipe is directly fixed to each battery cell, or a structure in which a cooling pipe is built in a box-shaped metal cooling plate and the cooling plate is fixed to a battery cell is known (for example, Patent Document 1).

### RELATED DOCUMENT

### PATENT DOCUMENT

[Patent Document 1] Japanese Laid-open Patent Publication No. 2009-134901

### SUMMARY OF THE INVENTION

### TECHNICAL PROBLEM

In particular, in a large-size and large-weight battery block, the structure in which a cooling pipe is brought into direct contact with each battery cell to perform cooling may have poor resistance to impact, vibration, and the like. In a battery block including a cooling plate having a built-in cooling pipe, each battery cell is cooled through the cooling pipe built in the cooling plate, and thus cooling efficiency is anticipated to deteriorate. Furthermore, since the cooling plate is made of a metal, a problem occurs in that the weight is increased.

The invention is contrived in view of the above circumstances, and an object of the invention is to provide a cooling plate which can increase cooling efficiency and makes it possible to achieve weight reduction of an entire battery structure.

### SOLUTION TO PROBLEM

According to the invention, a cooling plate and a battery structure are provided as follows.
[1] A cooling plate including: a resin plate in which a plurality of groove portions are formed; and a metal plate provided over a surface of the resin plate where the groove portions are formed,
   in which the resin plate and the metal plate are bonded to each other through an adhesive layer, and
   the groove portion of the resin plate forms a flow path for cooling water.
[2] The cooling plate according to [1], in which the adhesive layer is formed of a film adhesive or a liquid adhesive.
[3] The cooling plate according to [1] or [2], in which a fine uneven structure is formed in a surface of an adhesion portion of the metal plate to the adhesive layer.
[4] The cooling plate according to any one of [1] to [3], in which a hydrophilic group is formed in a surface of an adhesion portion of the metal plate to the adhesive layer.
[5] The cooling plate according to any one of [1] to [4], in which a water contact angle of a surface of an adhesion portion of the resin plate to the adhesive layer is in a range of 10° to 80°.
[6] The cooling plate according to any one of [1] to [5], in which outer peripheral end portions of the resin plate and the metal plate are riveted or screwed to each other.
[7] The cooling plate according to any one of [1] to [6], in which the metal plate is formed of at least one selected from the group consisting of an aluminum member, an aluminum alloy member, a copper member, and a copper alloy member.
[8] The cooling plate according to any one of [1] to [7], in which one end portion of the flow path for cooling water formed by the groove portion formed in the resin plate is connected to an inlet pipe, and the other end portion is connected to an outlet pipe.
[9] The cooling plate according to any one of [1] to [8], in which the cooling plate is provided to cool a battery block in which two or more prismatic, cylindrical, or pouch battery cells are disposed with flat surfaces set in an upright posture so as to be in close contact with each other or to be adjacent to each other at regular intervals.
[10] A battery structure including: a battery block in which two or more prismatic, cylindrical, or pouch battery cells are disposed with flat surfaces set in an upright posture so as to be in close contact with each other or to be adjacent to each other at regular intervals;
   the cooling plate according to any one of [1] to [9]; and
   a case which houses the battery block,
   in which the battery block is disposed over the metal plate of the cooling plate.
[11] The battery structure according to [10], in which the battery cell is a lithium ion battery.

### ADVANTAGEOUS EFFECTS OF INVENTION

According to the invention, it is possible to provide a cooling plate which can increase cooling efficiency and makes it possible to achieve weight reduction of an entire battery structure.

### BRIEF DESCRIPTION OF THE DRAWINGS

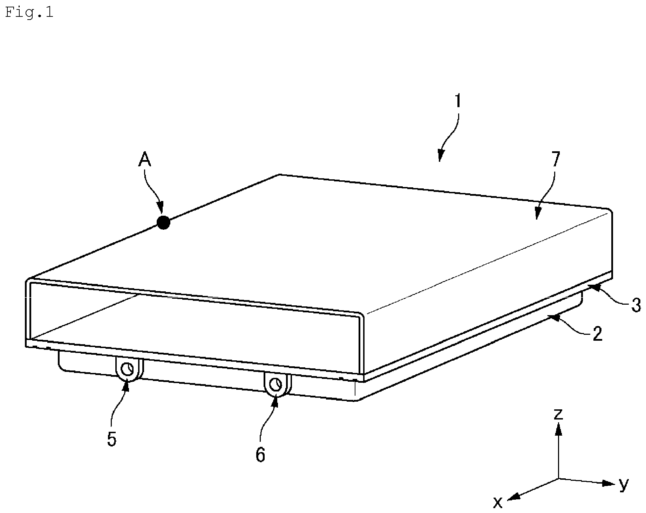

Fig. 1 is a perspective view schematically showing an example of a structure of a cooling plate according to this embodiment.

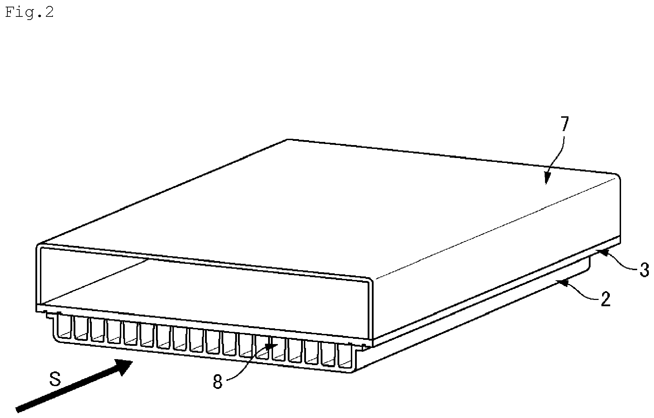

Fig. 2 is a cross-sectional perspective view in the y-z-direction passing through the point A of the cooling plate shown in Fig. 1.

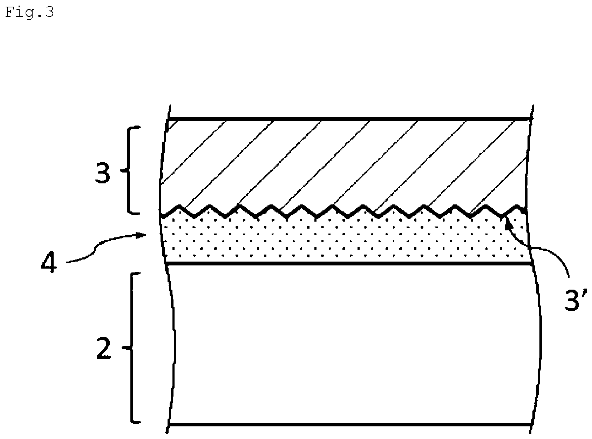

Fig. 3 is a conceptual view schematically showing an example of an adhesion state between a resin plate and a metal plate according to this embodiment.

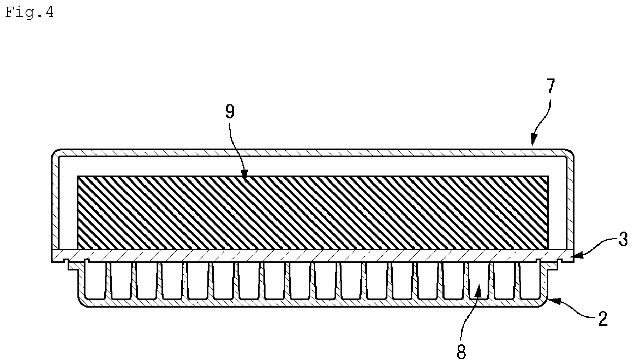

Fig. 4 is a cross-sectional view in which Fig. 2 is viewed from the S-direction.
Fig. 5 shows cross-sectional views showing examples (a) and (b) of the arrangement of battery cells housed in the case shown in Fig. 4.
Fig. 6 is a perspective view schematically showing a structure of a test piece for measuring tensile shear strength according to this embodiment.
Fig. 7 is a cross-sectional view schematically showing a tensile shear strength test method according to this embodiment.

### DESCRIPTION OF EMBODIMENTS

Hereinafter, embodiments of the invention will be described with reference to the drawings. In all the drawings, the same constituent elements are denoted by the same reference numerals, and description thereof will not be repeated. The drawings are schematic drawings showing an example of the invention, and dimension ratios in the drawings are different from the actual dimension ratios. Unless otherwise specified, the symbol "-" between numbers in the sentence represents from ... to.

### <Cooling Plate>

A cooling plate 1 according to this embodiment includes a resin plate 2 in which a plurality of groove portions are formed, and a metal plate 3 provided over a surface of the resin plate 2 where the groove portions are formed. The resin plate 2 and the metal plate 3 are bonded to each other through an adhesive layer 4, and the groove portion of the resin plate 2 forms a flow path 8 for cooling water.

Since the entire metal plate 3 is cooled by the flow paths 8 for cooling water formed in the resin plate 2, the cooling efficiency of battery cells in contact with the metal plate 3 can be increased. In addition, since the flow paths 8 for cooling water are formed by the lightweight resin plate 2, the weight of an entire battery structure can be reduced.

As described above, according to the cooling plate 1 according to this embodiment, cooling efficiency can be increased, and weight reduction of an entire battery structure can be achieved.

Hereinafter, the adhesive layer 4, the resin plate 2, and the metal plate 3 constituting the cooling plate 1 will be sequentially described, and then an example of a method of forming the cooling plate 1 with the constituent elements will be described.

### «Adhesive Layer 4»

In a surface where the resin plate 2 and the metal plate 3 of the cooling plate 1 according to this embodiment are in contact with each other, a layer formed of the resin plate 2 (hereinafter, may be referred to as a resin layer), the adhesive layer 4, and a layer formed of the metal plate 3 (hereinafter, may be referred to as a metal layer) are laminated in this order.

As an adhesive which forms the adhesive layer 4 according to this embodiment, a known solid or liquid (including a paste form) adhesive can be used. The method of forming an adhesive layer is not particularly limited, and a known method of forming an adhesive layer can be appropriately selected.

A film adhesive is preferable as a solid adhesive from the viewpoint of simplifying the process, and specific examples thereof include an adhesive in which an adhesive is laminated on both sides of a film, such as a known double-sided adhesive tape.

A solid adhesive is preferably used in a case where it is difficult to uniformly and thinly apply a liquid adhesive, or it is difficult to secure resistance to impact and bending. In addition, the solid adhesive may be preferably used from the viewpoint of reducing coating and drying steps.

In this embodiment, a known natural or synthetic adhesive can be used without limitation as a liquid adhesive which forms the adhesive layer, and a synthetic adhesive is preferable from the viewpoint of persistence of the adhesive force.

Synthetic adhesives can be classified into thermoplastic adhesives, heat curable adhesives, and elastomers, and heat curable adhesives are preferable from the viewpoint of adhesion strength. The heat curable adhesive may be a room temperature-reactive adhesive (one component type) or a thermosetting adhesive (two component type).

In a case where the material of the resin plate is likely to be deformed by heat, a room temperature-reactive adhesive is preferable, and in a case where the material of the resin plate is less likely to be deformed by heat, a thermosetting adhesive is preferable since productivity (adhesion speed and the like) is prioritized.

Examples of the room temperature-reactive adhesive include cyanoacrylate-based adhesives (one component) and modified silicone resin-based adhesives (moisture curing), and examples of the thermosetting adhesive include epoxy resin-based adhesives, melamine resin-based adhesives, phenolic resin-based adhesives, and urea resin-based adhesives (mainly two components) . Among the adhesives, adhesives containing an acrylic-modified heat curable resin such as an acrylic-modified epoxy resin or an acrylic-modified phenolic resin as a main component are preferably used from the viewpoint of bonding strength and environment resistance. Specific examples of the acrylic-modified heat curable resin include a graft polymer of a heat curable resin and a vinyl polymer, which is obtained by polymerizing an acrylate-based monomer such as an alkyl acrylate or a hydroxyethyl acrylate in the presence of a heat curable resin such as an epoxy resin or a phenolic resin. The type of the adhesive is optionally determined by those skilled in the art depending on the conditions such as what type of cooling plate is to be formed and what type of material is to be used for forming the cooling plate.

In this embodiment, the average thickness of the adhesive layer is, for example, 0.5 to 5,000 µm, preferably 1.0 to 2,000 µm, and more preferably 10 to 1, 000 µm. In a case where the average thickness is equal to or greater than the lower limit, the resin layer and the metal layer exhibit sufficient adhesion strength, and in a case where the average thickness is equal to or less than the upper limit, the residual strain amount generated during the curing reaction can be minimized.

The cooling plate 1 according to this embodiment may include a primer layer between the resin layer and the adhesive layer and between the adhesive layer and the metal layer. The primer layer is not particularly limited, and is usually made of a resin material containing a resin component constituting the resin layer. The resin material for a primer layer is not particularly limited, and a known material can be used. Specific examples thereof include polyolefin-based primers, epoxy-based primers, and urethane-based primers. The primers may be used in combination of two or more types thereof, including a multilayer mode.

### «Resin Plate 2»

The resin plate 2 according to this embodiment is preferably a molded body of a thermoplastic resin composition. The thermoplastic resin composition contains a thermoplastic resin as a resin component, and may further optionally contain a filler.

The thermoplastic resin is not particularly limited, and examples thereof include polyolefin-based resins, polar group-containing polyolefin-based resins, polymethacrylic resins such as a polymethylmethacrylate resin, polyacrylic resins such as a polymethylacrylate resin, polystyrene resins, polyvinyl alcohol-polyvinyl chloride copolymer resins, polyvinyl acetal resins, polyvinyl butyral resins, polyvinyl formal resins, polymethyl pentene resins, maleic anhydride-styrene copolymer resins, polycarbonate resins, polyphenylene ether resins, aromatic polyether ketones such as polyether ether ketone resins and polyether ketone resins, polyester-based resins, polyamide-based resins, polyamide imide resins, polyimide resins, polyether imide resins, styrene-based elastomers, polyolefin-based elastomers, polyurethane-based elastomers, polyester-based elastomers, polyamide-based elastomers, ionomers, amino polyacrylamide resins, isobutylene-maleic anhydride copolymers, ABS, ACS, AES, AS, ASA, MBS, ethylene-vinyl chloride copolymers, ethylene-vinyl acetate copolymers, ethylene-vinyl acetate-vinyl chloride graft polymers, ethylene-vinyl alcohol copolymers, chlorinated polyvinyl chloride resins, chlorinated polyethylene resins, chlorinated polypropylene resins, carboxyl vinyl polymers, ketone resins, amorphous copolyester resins, norbornene resins, fluoroplastics, polytetrafluoroethylene resins, fluorinated ethylene polypropylene resins, PFA, polychlorofluoroethylene resins,ethylene-tetrafluoroethylene copolymers, polyvinylidene fluoride resins, polyvinyl fluoride resins, polyarylate resins, thermoplastic polyimide resins, polyvinylidene chloride resins, polyvinyl chloride resins, polyvinyl acetate resins, polysulfone resins, poly-para-methylstyrene resins, polyallylamine resins, polyvinyl ether resins, polyphenylene oxide resins, polyphenylene sulfide (PPS) resins, polymethylpentene resins, oligoester acrylates, xylene resins, maleic acid resins, polyhydroxybutyrate resins, polysulfone resins, polylactic acid resins, polyglutamic acid resins, polycaprolactone resins, polyether sulfone resins, polyacrylonitrile resins, and styrene-acrylonitrile copolymer resins. The thermoplastic resins may be used alone or in combination of two or more types thereof.

Among these, as the thermoplastic resin, one or two or more thermoplastic resins selected from polyolefin-based resins, polyester-based resins, polyamide-based resins, fluororesins, polyarylene ether-based resins, and polyarylene sulfide-based resins are preferably used from the viewpoint of more efficiently obtaining the effect of improving the adhesion strength between the resin plate 2 and the adhesive layer 4 and/or between the metal plate 3 and the adhesive layer 4.

In the thermoplastic resin composition according to this embodiment, an optional component and a filler can be used in combination from the viewpoint of improving mechanical characteristics of the resin plate 2 and adjusting a difference in coefficient of linear expansion. As the filler, for example, one or two or more can be selected from the group consisting of glass fiber, carbon fiber, carbon particles, clay, talc, silica, mineral, and cellulose fiber. Among these, one or two or more selected from glass fiber, carbon fiber, talc, and mineral are preferable. A heat dissipating filler typified by alumina, forsterite, mica, alumina nitride, boron nitride, zinc oxide, magnesium oxide, or the like can also be used. The shape of the fillers is not particularly limited, and may be any one of a fibrous shape, a particle shape, a plate shape, and the like. However, as will be described later, in a case where the surface of the metal plate 3 has fine unevenness (also referred to as a fine uneven structure), a filler having a size large enough to enter the recess is preferably used.

In a case where the thermoplastic resin composition contains a filler, the content of the filler is preferably 1 part by mass to 100 parts by mass, more preferably 5 parts by mass to 90 parts by mass, and particularly preferably 10 parts by mass to 80 parts by mass with respect to 100 parts by mass of the thermoplastic resin.

A heat curable resin composition can also be used as the resin plate 2 according to this embodiment. The heat curable resin composition is a resin composition containing a heat curable resin. Examples of the heat curable resin include a phenolic resin, an epoxy resin, an unsaturated polyester resin, a diallyl phthalate resin, a melamine resin, an oxetane resin, a maleimide resin, an urea resin, a polyurethane resin, a silicone resin, a resin having a benzoxazine ring, and a cyanate ester resin. These may be used alone or in combination of two or more types thereof.

Among these, a heat curable resin composition containing one or more selected from the group consisting of a phenolic resin, an epoxy resin, and an unsaturated polyester resin is preferably used from the viewpoint of heat resistance, workability, mechanical characteristics, adhesion, rust resistance, and the like. The content of the heat curable resin in the heat curable resin composition is preferably 15 parts by mass to 60 parts by mass, and more preferably 25 parts by mass to 50 parts by mass, assuming that a total amount of the resin composition is 100 parts by mass. The residual component is, for example, a filler, and as the filler, for example, the above-described filler can be used.

A known method can be used without limitation as a method of molding the resin plate 2, and examples thereof include injection molding, extrusion molding, hot press molding, compression molding, transfer molding, cast molding, laser welding molding, reaction injection molding (RIM molding), liquid injection molding (LIM molding), and spray molding. Among these, an injection molding method is preferable as the method of manufacturing the resin plate 2 from the viewpoint of productivity and quality stability.

The water contact angle of the surface of the adhesion portion of the resin plate 2 according to this embodiment to the adhesive layer 4 (the surface bonded to the metal plate 3 through the adhesive layer) is, for example, 10° to 80°, preferably 20° to 65°, more preferably 20° to 50°, and even more preferably 20° to 40° or 25° to 60°. In a case where the water contact angle of the surface of the bonding portion satisfies the above range, the adhesion strength between the resin plate 2 and the metal plate 3 can be increased.

A known method can be used to impart a water contact angle within a specific range to the surface of the resin plate 2, and examples thereof include a UV treatment, a corona treatment, an ozone treatment, and a plasma treatment.

A plurality of groove portions are formed in one surface of the resin plate 2 according to this embodiment on the side of the metal plate 3, and the groove portions are preferably formed over the entire one surface on the side of the metal plate 3. The groove portion functions as a flow path 8 for a refrigerant by being in close contact with the surface of the metal plate 2. Usually, top portions of the plurality of groove portions are set to have the same height, and some or all top portions are in contact with the surface of the metal plate 2. An inlet pipe connection port 5 and an outlet pipe connection port 6 are provided at an inlet portion and an outlet portion of the flowpath (that is, end portions of the flow path) . A manifold portion is optionally provided in the flow path.

A reinforcing rib is preferably formed on the surface of the resin plate 2 according to this embodiment opposite to the surface on the side of the metal plate 3, and more preferably formed over the entire surface. By forming the reinforcing rib, the structural strength of the resin plate against external stress is increased, and by setting a high rib height, a sufficient space is formed between the resin plate and the contact plane, and a heat insulation effect can be improved in some cases.

### «Metal Plate 3»

The metal plate 3 constituting the cooling plate 1 according to this embodiment performs two functions: it diffuses heat from a heat generating body such as a lithium ion battery, and transfers the heat to the refrigerant flowing in the resin plate 2. Therefore, the metal species constituting the metal plate 3 have excellent heat conductivity. From such a viewpoint, aluminum or copper is used as the metal species constituting the metal plate 3, and specifically, at least one selected from the group consisting of an aluminum member, an aluminum alloy member, a copper member, and a copper alloy member is preferably used to constitute the metal plate. The average thickness of the metal plate 3 is, for example, 0.5 mm to 30 mm, and preferably 0.5 mm to 20 mm in consideration of heat conductivity, strength, and lightness.

At least the surface of the adhesion portion of the metal plate 3 to the adhesive layer 4 is preferably degreased. More preferably, at least the surface of the adhesion portion of the metal plate 3 to the adhesive layer 4 has fine unevenness or a hydrophilic group formed therein. It is even more preferable that a hydrophilic group is further formed in the surface having fine unevenness from the viewpoint of little temporal change in adhesion strength at a high temperature and a high humidity, and from the viewpoint of excellent adhesion strength after immersion in the cooling liquid.

In this manner, the adhesion strength between the adhesive layer 4 and the metal plate 3 can be increased, and as a result, leakage of the refrigerant can be further suppressed, and it is possible to obtain a cooling plate 1 which is more excellent in reliability of durability and mechanical strength.

In the preferred embodiment (first embodiment) of the invention, the size (depth, pore size, inter-pore distance, and the like) of the fine unevenness formed in the metal surface is not particularly limited, but ten-point average roughness Rz measured according to JIS B 0601: 2001 is, for example, 1 µm or greater, preferably 1 µm to 1 mm, and more preferably 3 µm to 100 µm.

The method of forming the fine unevenness having the above-described ten-point average roughness Rz in the metal surface of the metal plate 3 is not particularly limited, and examples thereof include a method of immersing a metal member in an aqueous solution of an inorganic base such as sodium hydroxide and/or an aqueous solution of an inorganic acid such as hydrochloric acid or nitric acid; a method of treating a metal member by an anodizing method; a method of forming unevenness in a surface of a metal member by pressing a die punch having unevenness produced by mechanical cutting such as diamond abrasive grain grinding or blasting against the surface of the metal member, or a method of producing unevenness in a surface of a metal member by sand blasting, knurling, or laser processing; and a method of immersing a metal member in an aqueous solution of one or more selected from hydrated hydrazine, ammonia, and a water-soluble amine compound as disclosed in International Publication No. WO2009/31632.

In particular, in a case where an immersion method is employed among the above-described methods, fine unevenness over the metal plate 3 is formed not only over the contact surface with the resin plate 2, but also over the whole surface of the metal plate 3, and the effects of the invention are not impaired by the above embodiment.

In another preferred embodiment (second embodiment) of the invention, specific examples of the hydrophilic group covering the metal surface include a hydroxyl group and a silanol group. A hydrophilic group such as a hydroxyl group can be introduced to the metal surface by, for example, implementing a plasma surface modification technology developed by appropriately combining OPENAIR (trade name) and PLASMAPLUS (trade name) technologies developed by Plasmatreat GmbH. In addition, a silanol group can be introduced to the metal surface by, for example, an itro treatment (silicic acid flame treatment) described in Japanese Patent No. 3557194, and thus introduction of the functional groups can be achieved. In order to further introduce a hydroxyl group or a silanol group to the metal surface having the fine uneven structure formed thereover, fine unevenness may be formed in the metal surface by the above method, and then a plasma or itro treatment may be further performed thereon.

### «Method of Forming Cooling Plate 1»

The cooling plate 1 according to this embodiment is formed by superposing the metal plate 3 over the surface of the resin plate 2 where the groove portions are formed, and bonding them together through an adhesive layer. Specifically, for example, the adhesive is applied to an adhesion surface on the side of the resin plate 2 and/or an adhesion surface on the side of the metal plate 3, and then the adhesion surfaces are adhered to each other. The adhesion conditions vary depending on the type of the adhesive used, but for example, the bonding can be performed at a temperature of room temperature to 150°C for 0.1 minutes to 7 days. The adhesion may be performed under pressure. In a case where the adhesion is performed under pressure, the pressure is, for example, about 0.01 to 1 MPa.

In the cooling plate 1 according to this embodiment, at least outer peripheral end portions of the resin plate 2 and the metal plate 3 are preferably riveted or screwed to each other, in addition to the bonding of the resin plate 2 to the metal plate 3 through the adhesive layer 4 as described above. As described above, in a case where the resin plate 2 and the metal plate are firmly bonded and mechanically fastened to each other in two stages, it is possible to more effectively suppress the leakage of the refrigerant flowing in the resin plate 2.

### <Battery Structure>

Hereinafter, an embodiment of a battery block and a battery structure according to this embodiment will be described.

A battery structure according to this embodiment includes a battery block in which two or more prismatic, cylindrical, or pouch battery cells 11 are disposed with flat surfaces set in an upright posture so as to be in close contact with each other or to be adjacent to each other at regular intervals, the cooling plate 1 according to this embodiment, and a case 7 which houses the battery block, and the battery block is disposed so as to be in contact with the metal plate 3 of the cooling plate 1.

That is, the cooling plate 1 according to this embodiment is used to cool a battery block in which two or more prismatic, cylindrical, or pouch battery cells are disposed with flat surfaces set in an upright posture so as to be in close contact with each other or to be adjacent to each other at regular intervals.

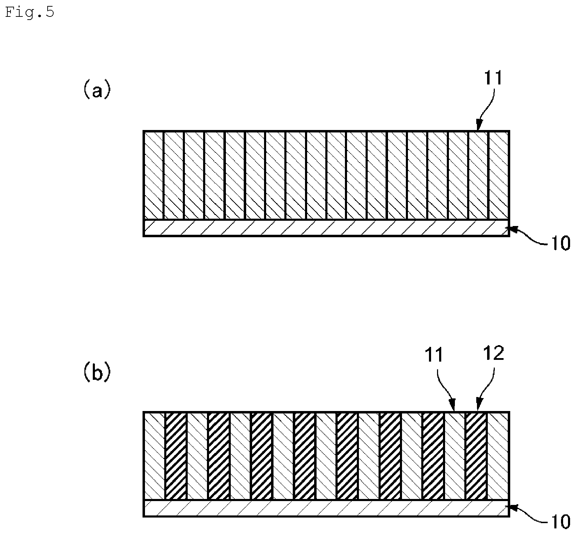

The battery block according to this embodiment preferably includes a plurality of battery cells 11 (see Fig. 5), a pair of side plates (not shown) which are fixed in a state in which the plurality of battery cells 11 are arranged in a predetermined direction, and a pair of end plates (not shown) which are disposed at both ends in the arrangement direction of the battery cells 11. In addition, the cooling plate 1 preferably extends in the arrangement direction of the plurality of battery cells 11. Preferably, one or more battery blocks are covered by, for example, a box-like or U-shaped metal case to provide water-proof, dust-proof, and impact-proof functions.

The battery cell 11 is, for example, a lithium ion secondary battery. In each battery cell 11, for example, a power generation unit (not shown) is housed in a battery can formed of a metal member such as aluminum. A nonaqueous electrolytic solution is injected, and the battery is sealed.

A spacer 12 fixed to the metal plate 3 may or may not be interposed between the battery cells 11. That is, the spacer 12 (cooling fin) may be formed on the side opposite to the resin plate 2 in the metal plate 3. In a case where the spacer 12 is not interposed between the battery cells (see (a) of Fig. 5), a void is generated between the adjacent battery cells, and thus air cooling is possible. Usually, a spacer 12 formed of an insulating member is interposed between the cells (see (b) of Fig. 5). In particular, in a case where pouch battery cells are used, the spacer 12 is interposed between the battery cells. Each spacer 12 has an opening portion into which the battery cell 11 is fitted on both sides thereof in the thickness direction (the arrangement direction of the battery cells), and has a partition wall formed in an intermediate portion thereof.

In the battery structure according to this embodiment, the spacer 12 may also have a function as a cooling fin. The material of the cooling fin is usually the same as that of the metal plate 3, and specific examples thereof include an aluminum alloy and a copper alloy. A heat conductive sheet 10 may be optionally attached to a surface of the cooling fin in contact with the battery cell 11. The end plate is formed by, for example, integrally molding an aluminum alloy formed by aluminum die casting or the like, a high-rigidity resin, or a resin and a steel plate.

The heat conductive sheet 10 is preferably interposed between the cooling plate 1 and a bottom surface of each battery cell 11. Usually, the numbers of heat conductive sheets 10 and the number of battery cells 11 are the same. That is, the heat conductive sheets 10 and the battery cells 11 are preferably disposed at a ratio of 1:1. By virtue of the above structure, heat conduction between each battery cell 11 and the cooling plate 1 can be improved even in a case where the position of a lower surface of each battery cell 11 in the height direction (Z-direction) is uneven.

However, in a case where the heat conductive sheet 10 is a strip member given at a ratio of 1:1 with the battery cell 11, the insulation resistance may be reduced. Regarding this, in a case where no spacers or cooling fins are erected on the surface of the metal plate, a structure in which one heat conductive sheet 10 is disposed to cover the whole region of the bottom surfaces of the battery cells may be employed. In a case where all the lower surfaces of the battery cells 11 are substantially flat, only one heat conductive sheet can be used. Instead of the heat conductive sheet 10, a so-called thermal interface material (TIM) may be used, and specific examples thereof include a thermal grease, a phase-change material (PCM), a gel, a high heat conductive adhesive, and a thermal tape. That is, a structure in which between the cooling plate 1 and each battery cell 11, an insulating heat conductive layer allowing heat conduction between both the members is interposed is preferable. The cooling plate 1 and each battery cell 11 may be provided with no heat conductive layer interposed therebetween, and may be in direct contact with each other.

Although the embodiments of the invention have been described above, these are merely an example of the invention, and include various configurations other than those described above.

### [Examples]

Hereinafter, embodiments of the invention will be described with examples, but this embodiment is not limited thereto.

### [Example 1]

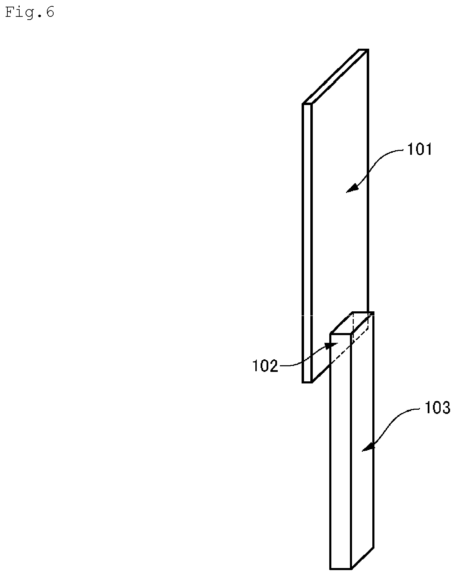

A test piece shown in Fig. 6 was produced by sequentially performing a degreasing treatment of an aluminum alloy, a surface treatment of a resin molded body, and a step of applying and curing an adhesive according to the following methods.

### <Degreasing Step>

An aluminum alloy plate (45 mm × 18 mm × 2.0 mm) of Alloy No. 6061 defined in JIS H4000 was degreased with a commercially available degreasing agent for an aluminum alloy "NE-6 (manufactured by Meltex Inc.) ". Next, the aluminum alloy plate was sufficiently washed with water, and then dried at 80°C for 20 minutes.

### <Surface Treatment of Resin Molded Body>

An adhesion surface of a polyphenylene sulfide resin (manufactured by Tosoh Corporation, inorganic filler content: 45 mass%, referred to as PPS in Table 1) as a resin molded body to the aluminum alloy plate was UV-treated in the usual manner (referred to as UV in Table 1) . Usually, the UV irradiation was performed under conditions of room temperature, 254 nm wavelength, and 5 minutes. The water contact angle of the UV-treated surface of the resin molded body was 33°. Here, in this example, the water contact angle was measured according to JIS R3257.

### <Coating Step>

An epoxy resin adhesive (an adhesive containing epoxy group-containing acrylic modified rubber as a main component, prepared according to Example 3 of Japanese Examined Patent Publication No. S60-26427 (a viscosity measured using a B type viscometer under conditions of 25°C and 0.2 rpm; 120 Pa ·s)) was applied to an end region (5 mm × 10 mm) of the aluminum alloy plate obtained in the degreasing step and the UV-irradiated surface of the resin molded body, respectively, and the aluminum alloy plate and the resin molded body were relatively disposed such that the epoxy resin adhesive layers applied were completely superposed on each other.

Here, the adhesive layer had an average thickness of 30 µm.

### <Curing Step>

The test piece in which the aluminum alloy plate and the resin molded body were relatively disposed was allowed to stand at room temperature for 10 minutes under a load of 1 kg, and then heated and cured at 60°C for 4 hours under the same load to obtain a test piece for measuring tensile shear strength shown in Fig. 6.

### <Measurement of Tensile Shear Strength (adhesion strength) and Observation of Fracture Surface>

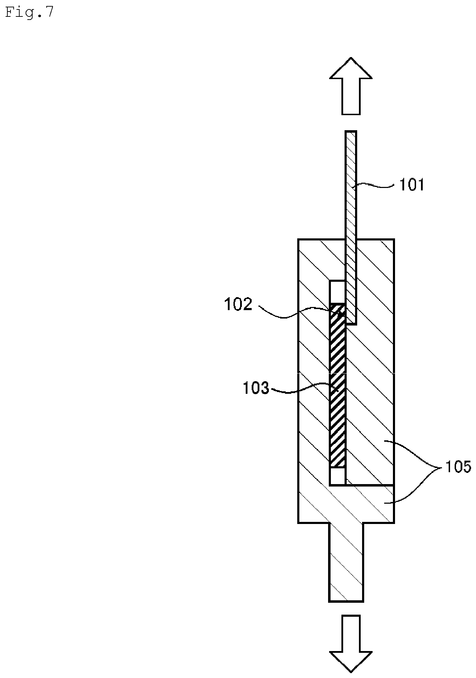

Using a tensile tester "Model 1323 (manufactured by Aikoh Engineering Co., Ltd.)", the measurement was performed with a dedicated tool 105 housing the test piece and attached to the tensile tester under conditions of room temperature (23°C), an inter-chuck distance of 60 mm, and a tensile speed of 10 mm/min. By dividing a breaking load (N) by an area (5 mm × 10 mm) of a bonding portion between a metal 101 (aluminum alloy plate) and a resin 103 (resin molded body), the adhesion strength between the aluminum alloy plate and the resin molded body was obtained (see Fig. 7). As a result, the adhesion strength was 28 MPa. A broken surface of the bonding portion was observed with a magnifying glass, and as a result, the failure type was confirmed to be material failure. Specifically, the material failure refers to cohesive failure of a resin, cohesive failure of an adhesive layer, or mixed failure thereof.

### [Example 2]

A test piece was produced in the same manner as in Example 1, except that instead of the UV-treated adhesion surface of the polyphenylene sulfide resin (manufactured by Tosoh Corporation, inorganic filler content: 45 mass%) as the resin molded body to the aluminum alloy plate, a surf ace-treated product (water contact angle: 35°) subjected to a plasma treatment (700 W, scanning speed: 5 m/min, a rotary nozzle, referred to as plasma treatment 1 in Table 1) was used in Example 1, and each evaluation was performed. The adhesion strength was obtained in the same manner as in Example 1, and as a result, the adhesion strength was 33 MPa. A broken surface of the bonding portion was observed with a magnifying glass, and as a result, the failure type was confirmed to be material failure.

Here, the adhesive layer had an average thickness of 30 µm.

### [Example 3]

A test piece was produced in the same manner as in Example 1, except that instead of the UV-treated adhesion surface of the polyphenylene sulfide resin (manufactured by Tosoh Corporation, inorganic filler content: 45 mass%) as the resin molded body to the aluminum alloy plate, a surf ace-treated product (water contact angle: 32°) subjected to a plasma treatment (700 W, scanning speed: 15 m/min, a straight nozzle, referred to as plasma treatment 2 in Table 1) was used in Example 1, and each evaluation was performed. The adhesion strength was obtained in the same manner as in Example 1, and as a result, the adhesion strength was 32 MPa. A broken surface of the bonding portion was observed with a magnifying glass, and as a result, the failure type was confirmed to be material failure.

Here, the adhesive layer had an average thickness of 30 µm.

### [Examples 4 to 14]

Test pieces were produced in the same manner as in Example 1, except that the surface treatment method of the aluminum alloy plate and the surface treatment method of the resin molded body were changed as shown in Table 1, and the types of the resin constituting the resin molded body and the adhesive were changed as shown in Table 1, and each evaluation was performed.

In Examples 11 and 12, the measurement was performed after the test piece was immersed in Super Long Life Coolant KQ301-34002 (44% ethylene glycol-containing aqueous solution) manufactured by Nissan Motor Co., Ltd. at 85°C for 168 hours.

In Examples 13 and 14, the measurement was performed after the test piece was stored under an environment of 85°C and 85%RH for 1,500 hours.

The polyphthalamide resin (PPA) and the silicone resin shown in Table 1 are as follows.
- PPA (manufactured by Mitsui Chemicals, Inc., product name: ARLEN A335)
- Silicone Resin (manufactured by ThreeBond Holdings Co., Ltd., product name: TB1226)

The surface treatment of the aluminum alloy plate shown in Table 1 was performed according to the following procedures.

### (Surface Treatment)

An aluminum alloy plate (thickness: 2.0 mm) of Alloy No. 6061 defined in JIS H4000 was cut into a piece having a length of 45 mm and a width of 18 mm. The aluminum alloy plate was etched by being immersed and shaken for 80 seconds in an acidic etching agent (sulfuric acid: 8.2 mass%, ferric chloride: 7.8 mass% (Fe³⁺: 2.7 mass%), cupric chloride: 0.4 mass% (Cu²⁺: 0.2 mass%), ion-exchanged water: remainder) (30°C) . Then, ultrasonic cleaning (in water, 1 minute) was performed with running water and dried.

**[Table 1]**

| | Aluminum Alloy Plate | | Resin | | | Adhesive | Adhesion Strength [MPa] | Failure Type |
|---|---|---|---|---|---|---|---|---|
| | Surface Treatment | Fine Uneven Structure | Type | Surface Treatment | Water Contact Angle | | | |
| Example 1 | degreasing | none | PPS | UV | 33° | epoxy resin | 28 | cohesive failure |
| Example 2 | degreasing | none | PPS | plasma 1 | 35° | epoxy resin | 33 | cohesive failure |
| Example 3 | degreasing | none | PPS | plasma 2 | 32° | epoxy resin | 32 | cohesive failure |
| Example 4 | degreasing | none | PPA | UV | 24° | epoxy resin | 32 | cohesive failure |
| Example 5 | degreasing | none | PPA | plasma 1 | 27° | epoxy resin | 27 | cohesive failure |
| Example 6 | degreasing | none | PPA | plasma 2 | 27° | epoxy resin | 27 | cohesive failure |
| Example 7 | degreasing | none | PPA | UV | 24° | silicone resin | 2 | cohesive failure |
| Example 8 | degreasing | none | PPS | none | 84° | epoxy resin | 2 | interfacial failure |
| Example 9 | degreasing | none | PPA | none | 82° | epoxy resin | 3 | interfacial failure |
| Example 10 | surface treatment | present | PPA | UV | 24° | epoxy resin | 31 | cohesive failure |
| Example 11 | degreasing | none | PPA | UV | 24° | epoxy resin | 13 | cohesive failure + partial interfacial failure |
| Example 12 | surface treatment | present | PPA | UV | 24° | epoxy resin | 33 | cohesive failure + partial interfacial failure |
| Example 13 | degreasing | none | PPA | UV | 24° | epoxy resin | 20 | cohesive failure + partial interfacial failure |
| Example 14 | surface treatment | present | PPA | UV | 24° | epoxy resin | 41 | cohesive failure |

This application claims priority to Japanese Patent Application No. 2018-147073 filed on August 3, 2018, incorporated herein by reference in its entirety.

### REFERENCE SIGNS LIST

- 1:: cooling plate
- 2:: resin plate
- 3:: metal plate
- 3':: fine uneven structure
- 4:: adhesive layer
- 5:: inlet pipe connection port
- 6:: outlet pipe connection port
- 7:: case
- 8:: flow path
- 9:: arranged battery cells
- 10:: heat conductive sheet
- 11:: battery cell
- 12:: spacer (cooling fin)
- 101:: metal
- 102:: adhesive layer
- 103:: resin
- 105:: tool

## Claims

1. A cooling plate comprising:
a resin plate in which a plurality of groove portions are formed; and
a metal plate provided over a surface of the resin plate where the groove portions are formed,
wherein the resin plate and the metal plate are bonded to each other through an adhesive layer, and
the groove portion of the resin plate forms a flow path for cooling water.

2. The cooling plate according to claim 1,
wherein the adhesive layer is formed of a film adhesive or a liquid adhesive.

3. The cooling plate according to claim 1 or 2,
wherein a fine uneven structure is formed in a surface of an adhesion portion of the metal plate to the adhesive layer.

4. The cooling plate according to any one of claims 1 to 3,
wherein a hydrophilic group is formed in a surface of an adhesion portion of the metal plate to the adhesive layer.

5. The cooling plate according to any one of claims 1 to 4,
wherein a water contact angle of a surface of an adhesion portion of the resin plate to the adhesive layer is in a range of 10° to 80°.

6. The cooling plate according to any one of claims 1 to 5,
wherein outer peripheral end portions of the resin plate and the metal plate are riveted or screwed to each other.

7. The cooling plate according to any one of claims 1 to 6,
wherein the metal plate is formed of at least one selected from the group consisting of an aluminum member, an aluminum alloy member, a copper member, and a copper alloy member.

8. The cooling plate according to any one of claims 1 to 7,
wherein one end portion of the flow path for cooling water formed by the groove portion formed in the resin plate is connected to an inlet pipe, and the other end portion is connected to an outlet pipe.

9. The cooling plate according to any one of claims 1 to 8,
wherein the cooling plate is provided to cool a battery block in which two or more prismatic, cylindrical, or pouch battery cells are disposed with flat surfaces set in an upright posture so as to be in close contact with each other or to be adjacent to each other at regular intervals.

10. A battery structure comprising:
a battery block in which two or more prismatic, cylindrical, or pouch battery cells are disposed with flat surfaces set in an upright posture so as to be in close contact with each other or to be adjacent to each other at regular intervals;
the cooling plate according to any one of claims 1 to 9; and
a case which houses the battery block,
wherein the battery block is disposed over the metal plate of the cooling plate.

11. The battery structure according to claim 10,
wherein the battery cell is a lithium ion battery.
